Europäisches Patentamt

European Patent Office

Office européen des brevets

(19)

(11) Publication number: **0 330 199**
**A1**

(12) **EUROPEAN PATENT APPLICATION**

(21) Application number: **89103187.4**

(22) Date of filing: **23.02.89**

(51) Int. Cl.⁴: **C08L 81/04 , C08L 63/00 , C08G 75/14 , C09K 3/10**

(30) Priority: **26.02.88 CH 727/88**

(43) Date of publication of application:
**30.08.89 Bulletin 89/35**

(84) Designated Contracting States:
**AT BE CH DE ES FR GB IT LI**

(71) Applicant: **SANDOZ AG**
**Lichtstrasse 35**
**CH-4002 Basel(CH)**

(84) **BE CH ES FR GB IT LI**

Applicant: **SANDOZ-PATENT-GMBH**
**Humboldtstrasse 3**
**D-7850 Lörrach(DE)**

(84) **DE**

Applicant: **SANDOZ-ERFINDUNGEN**
**Verwaltungsgesellschaft m.b.H.**
**Brunner Strasse 59**
**A-1235 Wien(AT)**

(84) **AT**

(72) Inventor: **Dischö, Karoly**
**Weiherstrasse 14**
**CH-8307 Effretikon(CH)**

(54) **Improvements in or relating to organic compounds.**

(57) Compositions consisting on the one side of a polysulfide polymer and on the other side of a hardener composition which contains an epoxy resin, sodium perborate and zinc oxide as well as an optional organic catalyst containing one or more amino groups, both components further containing various optional additives, are self-hardening, crosslinking compositions which can be used as sealant, coating, adhesive and the like in various industries, especially in the construction field.

EP 0 330 199 A1

## IMPROVEMENTS IN OR RELATING TO ORGANIC COMPOUNDS

The invention relates to polymeric compositions which, after curing, have excellent properties allowing various applications in the construction field.

More specifically, the invention relates to compositions consisting on the one side of a polymer having at least one mercaptan-endgroup (component A), and on the other side of a hardener composition (component B) which contains an epoxy resin having a long hydrocarbon chain and at least two epoxy groups, sodium perborate and zinc oxide as well as an optional organic catalyst containing one or more amino groups. These compositions may further contain, either in component A or in component B, various optional additives.

Both component A and component B are stable compositions with a long shelf-life which upon mixing give a self hardening, crosslinking composition which can be used as sealant, coating, adhesive and the like in various industries, especially in the construction field.

Compositions consisting on the one side of liquid polysulfide polymers and on the other side of a hardener composition have been known for many years (see e.g. USP 4.165.426, 3.813.368, DE 15.45.033, 33.29.076, 21.12.157 and FR 1.503.633). In all these cases, however, the hardener composition did not include an epoxy resin but usually lead containing oxides and/or manganese dioxide which are nowadays objected to. In other compositions an epoxy resin is present but is mostly reacted with the polysulfide polymer before the curing takes place (see e.g. EP 171.198, DE 11.64.008, 26.06.137, 26.06.138, 31.44.204, 29.01.686 and US 4.017.554, 4.214.067 and 3.457.215 as well as the Russian publication referred to in Chemical Abstracts, volume 101, no.6 of 6th August 1984, reference 39266 v) and the curing agent is different from the specific combination as claimed herein.

The advantage of using a two component system consisting of a polysulfide polymer on the one side and a hardener composition containing an epoxy resin on the other side has not been disclosed specifically.

As component A liquid polysulfide polymers having at least one mercaptan-endgroup are used, which are generally known for the above mentioned applications and preferably have two or more mercaptan-groups enabling them to crosslink with each other or with other functional groups as the epoxy groups of component B under appropriate conditions. Examples of such polymers are the well known commercial products of Thiokol Chemical Corp. preferably having a molecular weight of at least 1000 (Kirk-Othmer, Encyclopedia of Chemical Technology, 2nd Edition, volume 16 (1968), pages 253-272).

Component A is normally free of any solvent like water and/or organic solvents and, depending on the application of the curable mixture with component B, can contain various optional additives. These can be fillers like calcium carbonate, titanium dioxide, sulphur; stabilisers including UV-absorbers; softeners like (1-4)-alkylbenzylphthalate, e.g. butylbenzylphthalate or chloroparaffine; retarders; dyestuffs or perfumes. Such additives can, however, also be added to component B.

Again depending on the application, component A will have a varying content of mercaptan-containing polymer (expressed in parts by weight of polysulfide in 100 parts of the total component A) and preferably contains from 3 to 100 parts, more preferably from 15 to 40 parts of polysulfide. For the preferred application as sealing composition, this content will vary from 15-50 parts, more preferably 30-40 parts.

To 100 parts of such component A containing from 15 to 40 parts of poly sulfide in general from 5 to 20 parts, preferably from 6 to 10 parts by weight of component B are added.

Also component B is normally free of any solvent and contains an epoxy resin having a long hydrocarbon chain and at least two epoxy groups together with two inorganic hardeners, sodium perborate and zinc oxide, and optionally an organic catalyst containing one or more amino groups.

Preferred epoxy compounds are bifunctional or trifunctional prepolymers having long aliphatic chains with 6-24 C-atoms, preferably 8-10 C-atoms and an epoxy equivalent weight of 400-500. Such compounds are viscous liquids in the range of 2000-4000 m Pas.

Sodium perborate (as monohydrate or tetrahydrate) and zinc oxide are added as finely ground powders and should consist of fine particles having a diameter below 0.5 mm, preferably below 0.06 mm and most preferably from 0.005 to 0.01 mm. If necessary, the composition of component B should be ground upon mixing in order to obtain the necessary particle size which is necessary for the reactivity of the inorganic curing agents.

Desirably, component B will also contain an organic catalyst having one or more amino groups, preferably tertiary amino groups. Such compounds are known as curing agents for polysulfides as well as for epoxy compounds. A typical example of such catalysts is hexamethylene tetramine.

The different ingredients in component B can be present in widely varying amounts which depend on the ratio of component B to be used in relation to component A and on the polysulfide content of component A. In general, on 100 parts by weight of polysulfide content in component A 3 to 90 parts of sodium perborate, 1 to 60 parts of zinc oxide, 0.1 to 50 parts of epoxy compound and 0.1 to 2 parts of organic catalyst will be used to give quickly curing polymeric compositions having the desired properties of adhesive, coating and/or sealing compositions. Based on 100 parts by weight of the total component B including further additives, this component B normally contains from 10 to 74 parts sodium perborate, from 2 to 50 parts zinc oxide, from 0.4 to 20 parts epoxy resin and from 0.1 to 10 parts catalyst.

The preparation of the polymeric compositions according to the invention is performed by known methods of combined mixing and grinding in order to obtain homogeneous mixtures of organic and inorganic components having the desired particle size. The curable compositions are placed by conventional calking cartridges.

The advantages of the polymeric compositions according to the invention reside in the facts that on the one side two components are provided as stable compositions with a long shelf-life and that on the other side by mixing components A and B a quickly curing composition is obtained without the use of toxic hardeners like lead oxides and without the use of manganese dioxide which is known to bleed out of the cured compositions and to stain concrete constructions sealed by a manganese containing sealant.

The obtained coatings and sealants have an excellent tensile strength and hardness without loosing flexibility and adhere well to concrete or metal surfaces. Sealing joints made with a polymer composition according to the invention show a remarkable rebound on compression or elongation.

In the following examples all parts indicated are by weight and temperatures are expressed in centigrades ($°$C).

### Example 1

Component B was prepared by mixing in a laboratory mixer first 5 parts of epoxy resin Araldite ® GY 298 (sold by Ciba-Geigy) having a viscosity of 2800 m Pas and epoxy equivalent weight 420 together with 20 parts hexamethylenetetramine. To this mixture 190 parts of sodium perborate monohydrate and 190 parts zinc oxide are added in small portions while the whole mass is continuously stirred and homogenised without attaining a temperature above 40°.

13 parts of this mixture are added to 100 parts of component A which is a mixture containing 36 parts of polysulfide "Thiokol ® LP 32" (sold by Thiokol Chem.Corp.) as well as fillers, softeners, retarders and other conventional additives, and thoroughly mixed at ambient temperature in a cooled three-roll paint mill.

The obtained sealing composition is self-curing at ambient temperature within 3 to 4 days, is easily workable for at least 3 hours and has an excellent tensile strength and elongation at break as well as quantitative rebound on elongation.

A comparable sealant is obtained when 543 parts butylbenzylphthalate are added to the epoxy resin, and 50 parts calcium carbonate which is coated with calcium stearate and has a maximum particle size of 75 m$\mu$, are added to the zinc oxide.

### Example 2

Component B is prepared as in example 1 from

| 100 | parts | epoxy resin (as in example 1), |
| 10 | parts | hexamethylenetetramine, |
| 360 | parts | sodium perborate monohydrate, |
| 20 | parts | zinc oxide. |

Optionally, this composition can also contain 367 parts chlorinated paraffine (chlorine content 55 % by weight) and 140 parts calcium carbonate.

10 parts of this mixture are added to 100 parts of component A which is a mixture containing 20 parts polysulfide "Thiokol ® LP 2" (Thiokol Chem.Corp.), 8 parts titanium dioxide, 1 part sulphur, 1.5 part UV-stabiliser, 30 parts calcium carbonate and 29 parts chlorinated paraffine.

The obtained composition is fluid and can be used as a self nivellating pouring mass or coating which, after curing at ambient temperature for three days, gives an elastomeric product with a glass transition temperature range from -40° to -50°. Instead of a mixture containing 20 parts polysulfide Thiokol ® LP 2 also one containing 10 parts polysulfide Thiokol ® LP 3 or mixtures of such products can be used to obtain comparable products.

Example 3

Component B is prepared in accordance with example 1 with

| 10 | parts | epoxy resin (as in example 1) |
|---|---|---|
| 240 | parts | sodium perborate tetrahydrate, |
| 140 | parts | zinc oxide, |
| 10 | parts | hexamethylenetetramine. |

Optional further components are

| 300 | parts | butylbenzylphthalate, |
|---|---|---|
| 270 | parts | chlorinated paraffine, |
| 30 | parts | calcium carbonate. |

8 parts of this mixture are added to 100 parts of a mixture consisting of 18 parts polysulfide Thiokol ® LP 2, 23 parts calcium carbonate, 10 parts titanium dioxide, 3 parts iron oxide red, 2 parts iron oxide yellow, 5 parts silica (Aerosil ® 130) and 27 parts chlorinated paraffine (chlorine content 70% by weight) to obtain a rapidly curing sealing composition.

Example 4

Component B is prepared in accordance with example 1 and contains

| 43 | parts | butylbenzylphthalate |
|---|---|---|
| 0.4 | parts | epoxy resin (as in example 1) |
| 0.5 | parts | hexamethylene tetramine |
| 1 | part | tetramethylthiuramdisulfide |
| 11.5 | parts | sodium perborate tetrahydrate |
| 18 | parts | sulphur |
| 24.6 | parts | zinc oxide |
| 1 | part | calcium carbonate (as in example 1) |

7.5 parts of this mixture are added to 100 parts of component A containing 25 parts of polysulfide Thiokol ® LP 32 and 75 parts of conventional additives.

Example 5

Component B is prepared in accordance with example 1 and contains

| 44.5 | parts | butylbenzylphthalate |
|---|---|---|
| 0.5 | parts | epoxy resin (as in example 1) |
| 2 | parts | hexamethylene tetramine |
| 10 | parts | titanium dioxide |
| 19 | parts | zinc oxide |
| 5 | parts | calcium carbonate |
| 19 | parts | sodium perborate monohydrate |

9 parts of this mixture are added to 100 parts of component A which is a mixture containing 27 parts of polysulfide Thiokol ® LP 32 and 73 parts of conventional additives.

## Claims

1. A curable composition consisting of a polymeric component (A) having at least one mercaptan-endgroup and a hardening component (B) containig an epoxy resin having a long hydrocarbon chain and at least two epoxy groups, sodium perborate and zinc oxide.

2. A curable composition according to claim 1 in which component (B) also contains an organic catalyst having one or more amino groups.

3. A curable composition according to claim 1 or 2 in which either component (A) or component (B) further contains fillers, softeners, stabilisers, retarders, perfumes and/or dyestuffs.

4. A curable composition in accordance with any one of claims 1 to 3 in which component (A) is a polysulfide with a molecular weight of at least 1000.

5. A curable composition in accordance with any one of claims 1 to 4 in which the epoxy resin contains an aliphatic hydrocarbon chain with 6-24 C-atoms and has an epoxy equivalent weight of 400-500.

6. A curable composition in accordance with any one of claims 1 to 5 in which the inorganic components have a particle size below 0.5 mm.

7. A curable composition according to claim 6 in which the particle size of the inorganic components is from 0.005 to 0.01 mm.

8. A curable composition in accordance with any one of claims 1 to 7 in which on 100 parts by weight of polysulfide content in component (A), component (B) contains 3 to 90 parts sodium perborate, 1 to 60 parts zinc oxide, 0.1 to 50 parts epoxy resin and 0.1 to 2 parts of organic catalyst.

9. A hardening composition for polysulfide polymers containing an epoxy resin having a long hydrocarbon chain and at least two epoxy groups, sodium perborate and zinc oxide.

10. A hardening composition according to claim 9 further containing an organic catalyst having one or more amino groups.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | EP-A-0 171 198  (THIOKOL CHEMICALS LTD) * claims 1,23,24,29; page 3, lines 4-25; page 7, lines 1-16 * | 1,2,4,9 ,10 | C 08 L  81/04 C 08 L  63/00 C 08 G  75/14 C 09 K   3/10 |
| A,D | DE-B-1 164 008  (BOSTIK GMBH) * claims; column 4, lines 28-31 * | 1-3,9, 10 | |
| A,D | US-A-4 165 426  (PAUL, N.H.) * claim 1 * | 1,9 | |
| A | PATENT ABSTRACTS OF JAPAN vol. 10, no. 78 (C-335)(135), 27th March 1986; & JP - A - 60 215 056 (YOKOHAMA GOMU K.K.) 28.10.85 * whole abstract * | 1,9 | |
| A,D | CHEMICAL ABSTRACTS vol. 101, no. 6, 6th August 1984, page 39, abstract no. 39266v, Columbus, Ohio, US; ZELENINA, E.N. et al.:"Effect of curing conditions on mechanical properties of epoxy-Thiokol compositions."; & Atmosferostoikie Lakokras. Pokrytiya Prognozirovanie Srokov Ikh Sluzhby, Mater. Semin., 1982, 105-110 * whole abstract * | 1,9 | TECHNICAL FIELDS SEARCHED (Int. Cl.4) C 08 G C 08 L |
| A,D | US-A-4 214 067  (M. PACKER) * claims 1-3; column 2, lines 30-38 * | 1,2 | |

The present search report has been drawn up for all claims

| Place of search | Date of completion of the search | Examiner |
|---|---|---|
| BERLIN | 16-05-1989 | VOIGTLAENDER R O J |

EPO FORM 1503 03.82 (P0401)